# EUROPEAN PATENT APPLICATION

(11) **EP 4 474 361 A1**
(43) Date of publication of application: **11.12.2024**
(21) Application number: 23747175.0
(22) Date of filing: 31.01.2023
(51) Int. Cl.: C03C 3/097, C03C 10/04, C03C 10/14

(54) **CRYSTALLIZED INORGANIC COMPOSITION ARTICLE**

(30) Priority: 31.01.2022 JP 2022012978
(71) Applicant: Ohara, Inc., Sagamihara-shi, Kanagawa 252-5286 (JP)
(72) Inventor: ODA, Nozomu, Sagamihara-shi, Kanagawa 252-5286 (JP); KIKKAWA, Saya, Sagamihara-shi, Kanagawa 252-5286 (JP); OGASAWARA, Kohei, Sagamihara-shi, Kanagawa 252-5286 (JP)
(74) Representative: SSM Sandmair
(86) International application number: PCT/JP2023/003045
(87) International publication number: WO 2023/145965

(57) **Abstract**

Provided is an inorganic composition article that is transparent and exhibits excellent heat processability and high mechanical strength and that can be used in a cover glass of a smartphone or a glass member of a casing when a curved surface shape is to be obtained through heat processing. The crystallized inorganic composition article is characterized in that when the yield point is denoted by At (°C), the transmittance of the inorganic composition article at 550 nm when heated to [At + 50]°C is 50% or higher, and raw glass calculated in terms of mass% of oxides includes 65.0-85.0% of an SiO₂ component content, 3.0-15.0% of an Al₂O₃ component content, from greater than 0% to 5.0% of a P₂O₅ component content, from greater than 5.0% to 15.0% of a Li₂O component content, 0-10.0% of a ZrO₂ component content, and 0-5.0% of an MgO component content with the [(Al₂O₃ component content)/(K₂O component content + MgO component content)] being from greater than 0 to 20.0, and the [(Li₂O component content)/(MgO component content)] being 8.0 or greater.

## Description

### FIELD OF THE DISCLOSURE

The present disclosure relates to a crystallized inorganic composition article.

### BACKGROUND OF THE DISCLOSURE

In recent years, in order to increase the degree of freedom in the design of smartphones, a use of a glass member having a curved surface shape has begun in a cover glass and a housing of the smartphones. During the manufacture of the glass member, it is required to obtain a curved surface shape having excellent transparency through thermal processing of a glass plate. Furthermore, the glass member is required to be resistant to breakage even when subjected to impact from an external factor. For this reason, there is a demand for an inorganic composition article having high mechanical strength and excellent transparency even after thermal processing, which can be used as a glass member of a cover glass and a housing of smartphones.

Crystallized glass is a type of glass having increased strength. The crystallized glass is glass in which crystals are precipitated inside, and is known to have superior mechanical strength to amorphous glass.

Patent Document 1 discloses a glass-ceramic material having a transparent or translucent petalite crystalline phase and a lithium silicate crystalline phase, which has rapid ion exchangeability and high fracture toughness.

Moreover, Patent Document 2 discloses a glass ceramic for optical filters having a good thermal expansion coefficient and light transmittance at the operating temperature because the temperature of the substrate material during film formation is about 200°C.

Furthermore, Patent Document 3 discloses a glass ceramic for an optical filter having a good thermal expansion coefficient and light transmittance at the temperature used during film formation.

Patent Document 4 discloses an inorganic composition article for use in disk substrates for information recording media, which has good surface properties that are fully compatible with the ramp load method for high-density recording, high strength that can withstand high-speed rotation and drop impact, and thermal expansion properties and heat resistance that match each drive member, and which has a low melting temperature and high productivity.

However, none of the related art literatures describe materials having high transmittance even after thermal processing.

### [Prior Art Document]

### [Patent Document]

Patent Document 1: JP 2021-095333 A
Patent Document 2: JP 2001-048584 A
Patent Document 3: JP 2020-019659 A
Patent Document 4: JP 2008-254984 A

### SUMMARY OF THE DISCLOSURE

An object of the present disclosure is to provide an inorganic composition article having high mechanical strength and excellent transparency even after thermal processing, making it suitable for use in a glass member of a cover glass and a housing of a smartphone when a curved surface shape is obtained by thermal processing.

### [Solution to Problem]

The present disclosure provides the following.

### (Configuration 1)

A crystallized inorganic composition article, including: an inorganic composition article having a transmittance of 50% or more at 550 nm when heated to [At + 50]°C, where At (°C) is a yield point, wherein, in a raw glass, by mass% in terms of oxide,
a content of a SiO₂ component is 65.0% to 85.0%,
a content of an Al₂O₃ component is 3.0% to 15.0%,
a content of a P₂O₅ component is more than 0% to 5.0%,
a content of a Li₂O component is more than 5.0% to 15.0%,
a content of a ZrO₂ component is 0% to 10.0%,
a content of a MgO component is 0% to 5.0%,
[the content of the Al₂O₃ component/(a content of a K₂O component + the content of the MgO component)] is more than 0 to 20.0, and
[the content of the Li₂O component/the content of the MgO component] is 8.0 or more.

### (Configuration 2)

The crystallized inorganic composition article according to configuration 1, wherein, in the raw glass, by mass% in terms of oxide,
the content of the K₂O component is 0% to 5.0%,
a content of a ZnO component is 0% to 5.0%, and
a content of a Sb₂O₃ component is 0% to 3.0%.

### (Configuration 3)

The crystallized inorganic composition article according to configuration 1 or 2, including one or more types of crystal phases selected from lithium disilicate, petalite, vergilite, β-quartz, and lithium monosilicate.

### (Configuration 4)

The crystallized inorganic composition article according to any one of configurations 1 to 3, wherein, in the raw glass, by mass% in terms of oxide, a total content of the Li₂O component, a Na₂O component, and the K₂O component [the content of the Li₂O component + the content of the Na₂O component + the content of the K₂O component] is 3.0% to 17.0%.

### (Configuration 5)

The crystallized inorganic composition article according to any one of configurations 1 to 4, wherein, in the raw glass, by mass% in terms of oxide, a total content of the Li₂O component and the P₂O₅ component [the content of the Li₂O component + the content of the P₂O₅ component] is 8.0% to 18.0%.

### (Configuration 6)

The crystallized inorganic composition article according to any one of configurations 1 to 5, in which the raw glass does not contain TiO₂, Bi₂O₃, Cr₂O₃, CuO, La₂O₃, MnO, MoO₃, PbO, V₂O₅, WO₃, or Y₂O₃ component.

### (Configuration 7)

The crystallized inorganic composition article according to any one of configurations 1 to 6, wherein, in the raw glass, by mass% in terms of oxide, [the content of the SiO₂ component/ the content of the ZrO₂ component] is 15.0 to 40.0.

### (Configuration 8)

The crystallized inorganic composition article according to any one of configurations 1 to 7, wherein, in the raw glass, by mass% in terms of oxide, [the content of the SiO₂ component/(the content of the Na₂O component + the content of the K₂O component)] is 23.0 to less than 100.0.

According to the present disclosure, it is possible to provide an inorganic composition article having high mechanical strength and excellent transparency even after thermal processing, making it suitable for use in a glass member of a cover glass and a housing of a smartphone when a curved surface shape is obtained by thermal processing.

In view of the high strength and transparency even when heated, the crystallized inorganic composition article according to the present disclosure may be utilized as a cover glass or a housing of a smartphone, a member of a portable electronic device such as a tablet PC and a wearable terminal, and a protective protector, a member of a substrate for a head-up display, or the like used in a transport vehicle such as a car and an airplane.

### DETAILED DESCRIPTION OF THE EXEMPLARY EMBODIMENTS

Embodiments and examples of a crystallized inorganic composition article according to the present disclosure will be described in detail below. However, the present disclosure is not limited to the following embodiments and examples, and may be implemented by making modifications as appropriate within the scope of the purpose of the present disclosure.

### [Crystallized Inorganic Composition Article]

The crystallized inorganic composition article according to the present disclosure has a transmittance of 50% or more at 550 nm when heated to [At + 50]°C, where At (°C) is a yield point. The raw glass has a specific range of composition.

The crystallized inorganic composition article according to the present disclosure is, for example, a crystallized glass. The crystallized glass may be strengthened crystallized glass having a compressive stress layer formed on the surface by various types of strengthening methods. The various types of strengthening methods will be discussed later.

The crystallized inorganic composition article according to the present disclosure can be produced by adjusting the raw material composition and production conditions according to the manufacturing method and examples described below.

### <Method for Manufacturing Crystallized Glass>

An example of a method for manufacturing crystallized glass is described below.

Firstly, an amorphous plate glass is prepared. It is preferable to shape the plate glass in advance so that it will have a desired shape or a shape close to the desired shape after deformation.

The surface of the plate glass may be polished to a mirror finish in advance, or may be left as a ground surface in advance.

It is sufficient that the material of the plate glass may be a glass obtained by precipitating crystals by being heated, that is, a raw glass of crystallized glass.

As for the composition of the raw glass, by mass% in terms of oxide,
a content of a SiO₂ component is 65.0% to 85.0%,
a content of an Al₂O₃ component is 3.0% to 15.0%,
a content of a P₂O₅ component is more than 0% to 5.0%,
a content of a Li₂O component is more than 5.0% to 15.0%,
a content of a ZrO₂ component is 0% to 10.0%,
a content of a MgO component is 0% to 5.0%,
[the content of the Al₂O₃ component/(a content of a K₂O component + the content of the MgO component)] is more than 0 to 20.0, and
[the content of the Li₂O component/the content of the MgO component] is 8.0 or more.

Further, in order for the raw glass to be easily deformed into a curved surface shape by thermal processing and for the crystallized glass member to have a high light transmittance in the visible range, in addition to having the above composition, the raw glass may have the configuration described below.

As used herein, a content of each component is expressed as "by mass% in terms of an oxide" for all components, unless otherwise specified. Here, "by mass% in terms of an oxide" means, if it is assumed that all the constituent components included in the crystallized glass are decomposed and converted into oxides, when a total amount of the oxides is 100 mass%, an amount of oxides in each of the components contained in the crystallized glass is expressed by mass%. As used herein, "A% to B%" represents A% or more and B% or less.

The SiO₂ component is a framework component constituting the inorganic composition article, and is an essential component necessary for increasing stability and precipitating a desired crystal phase. When the content of the SiO₂ component is 85.0% or less, it is possible to suppress an excessive increase in viscosity and deterioration in solubility, and when the content is 65.0% or more, it is possible to improve the stability of the inorganic composition article.

Therefore, the upper limit is preferably 85.0% or less, more preferably 83.0% or less, and still more preferably 80.0% or less. Further, the lower limit is preferably 65.0% or more, more preferably 68.0% or more, and still more preferably more than 70.0%.

The Al₂O₃ component is a framework component constituting the inorganic composition article, and is an essential component required for enhancing stability. When the content of the Al₂O₃ component is 15.0% or less, it is possible to suppress a deterioration in resistance to devitrification (resistance to decrease in transparency due to crystallization), and when the content is 3.0% or more, it is possible to suppress a deterioration in stability.

Therefore, the upper limit is preferably 15.0% or less, more preferably 13.0% or less, and still more preferably less than 12.0%. Further, the lower limit is preferably 3.0% or more, more preferably 4.0% or more, still more preferably 5.0% or more, yet still more preferably more than 7.0%, and even more preferably more than 8.0%.

The P₂O₅ component is an essential component that promotes crystal formation in the inorganic composition article. When the content of the P₂O₅ component is 5.0% or less, it is possible to suppress the phase separation of the glass. Further, if the content is 0%, the desired crystal phase cannot be obtained.

Therefore, the upper limit is preferably 5.0% or less, more preferably 4.5% or less, and still more preferably 4.0% or less. Further, the lower limit can be preferably more than 0%, more preferably 0.5% or more, and still more preferably 1.0% or more.

The Li₂O component is an essential component for improving the solubility of the raw glass and enhancing manufacturability. When the content of the Li₂O component is 15.0% or less, it is possible to suppress a deterioration in resistance to devitrification, and when it exceeds 5.0%, it is possible to suppress a deterioration in viscosity and solubility, and manufacturability can be improved. Moreover, it is possible to obtain the desired crystal phase.

Therefore, the lower limit is preferably more than 5.0%, more preferably 6.0% or more, and still more preferably 7.0% or more. Further, the upper limit is preferably 15.0% or less, more preferably 13.0% or less, and still more preferably 12.0% or less.

The ZrO₂ component is a component that enables production of the glass according to the present disclosure even when its content is 0%, however, if the content exceeds 0%, the ZrO₂ component acts as a nucleus forming agent for crystals. When the content of the ZrO₂ component is 10.0% or less, it is possible to suppress the deterioration in solubility.

Therefore, the upper limit is preferably 10.0% or less, more preferably 8.0% or less, still more preferably 5.0% or less, and yet still more preferably less than 2.5%. Further, the lower limit can be preferably 0% or more, more preferably 0.5% or more, still more preferably 0.8% or more, yet still more preferably 1.0% or more, and even more preferably more than 1.5%.

The MgO component is a component that enables production of the glass according to the present disclosure even when its content is 0%, however, if the content exceeds 0%, the MgO component improves low-temperature solubility. If the content of the MgO component is 5.0% or less, it becomes easier to strengthen the glass during chemical strengthening.

Therefore, the upper limit can be preferably 5.0% or less, more preferably 3.0% or less, and still more preferably less than 2.0%. Further, the lower limit can be preferably 0% or more, more preferably 0.1% or more, and still more preferably 0.2% or more.

The ZnO component is a component that enables production of the glass according to the present disclosure even when its content is 0%, however, if the content exceeds 0%, the ZnO component improves low-temperature solubility. If the content of the ZnO component is 5.0% or less, it becomes easier to strengthen the glass during chemical strengthening.

Therefore, the upper limit can be preferably 5.0% or less, more preferably 3.0% or less, and still more preferably less than 2.0%. Further, the lower limit can be preferably 0% or more, more preferably more than 0%, still more preferably 0.1% or more, and yet still more preferably 0.2% or more.

The CaO component is a component that enables production of the glass according to the present disclosure even when its content is 0%, however, if the content exceeds 0%, the CaO component improves low-temperature solubility. If the content of the CaO component is 5.0% or less, it becomes easier to strengthen the glass during chemical strengthening.

Therefore, the upper limit can be preferably 5.0% or less, more preferably 3.0% or less, and still more preferably less than 1.0%.

The SrO component and the BaO component are components that enable production of the glass according to the present disclosure even when their content is 0%, however, if the content exceeds 0%, each of the SrO component and the BaO component improves low-temperature solubility. If the content of each of the SrO component and the BaO component is 5.0% or less, it becomes easier to strengthen the glass during chemical strengthening.

Therefore, the upper limit of each of the SrO component and the BaO component can be preferably 5.0% or less, more preferably 3.0% or less, and still more preferably 1.0% or less. Further, the lower limit of each of the components can be preferably 0% or more, more preferably 0.3% or more, and still more preferably 0.3% or more.

When the total content of the CaO component and the MgO component [the content of the CaO component + the content of the MgO component] is 5.0% or less, it is possible to suppress the difficulty in performing chemical strengthening, and even when the content is 0%, it is possible to produce the glass according to the present disclosure, however, if the content exceeds 0%, it is possible to prevent a deterioration in solubility.

Therefore, the upper limit of [the content of the CaO component + the content of the MgO component] is preferably 5.0% or less, more preferably 3.0% or less, still more preferably less than 3.0%, and yet still more preferably 1.0% or less.

Moreover, the lower limit of [the content of the CaO component + the content of the MgO content] is preferably 0% or more, more preferably more than 0%, still more preferably 0.1% or more, and yet still more preferably 0.2% or more.

The K₂O component and the Na₂O component are components that improve the solubility of the raw glass and increase the manufacturability. When the content of each of the K₂O component and the Na₂O component is 5.0% or less, it is possible to suppress the deterioration in resistance to devitrification. Further, even when the content of each of the K₂O component and the Na₂O component is 0%, it is possible to produce the glass according to the present disclosure, however, if the content exceeds 0%, it is possible to suppress the deterioration in viscosity and solubility, and increase the manufacturability.

Therefore, the lower limit of each of the K₂O component and the Na₂O component is preferably 0% or more, more preferably more than 0%, still more preferably 0.2% or more, and yet still more preferably 0.3% or more. Further, the upper limit of each of the K₂O component and the Na₂O component is preferably 5.0% or less, more preferably 4.0% or less, still more preferably less than 3.0%, and yet still more preferably less than 2.0%.

The Sb₂O₃ component is a component that functions as a clarifying agent during the manufacture of the raw glass. If the Sb₂O₃ component is contained in excess, a transmittance in a short wavelength region of the visible light region may deteriorate. Therefore, the upper limit can be preferably 3.0% or less, more preferably 1.0% or less, still more preferably 0.6% or less, and yet still more preferably 0.5% or less. Further, the lower limit can be preferably 0% or more, more preferably 0.03% or more, and still more preferably 0.06% or more.

The B₂O₃ component has the effect of lowering the viscosity of the raw glass. If the content of the B₂O₃ component is 10.0% or less, it is possible to suppress a deterioration in resistance to devitrification. Even when the content of the B₂O₃ component is 0%, it is possible to produce the glass according to the present disclosure, however, if the content exceeds 0%, it is possible to suppress the deterioration in viscosity of the raw glass and deterioration in solubility.

Therefore, the upper limit can be preferably 10.0% or less, more preferably 8.0% or less, still more preferably 7.0% or less, yet still more preferably 5.0% or less, even more preferably 4.0% or less, and further more preferably 3.0% or less.

Further, the lower limit can be preferably 0% or more, more preferably more than 0%, still more preferably 0.001% or more, yet still more preferably 0.01% or more, even more preferably 0.05% or more, further more preferably 0.10% or more, and even further more preferably 0.30% or more.

The glass according to the present disclosure can be produced even when the total content of the K₂O component and the Na₂O component [the content of the K₂O component + the content of the Na₂O component] is 0%, however, if the total content exceeds 0%, it is possible to suppress a deterioration in the viscosity and suppress an increase in the melting temperature. Further, when the total content is 5.0% or less, it is possible to suppress a deterioration in resistance to devitrification.

Therefore, the lower limit of [the content of the K₂O component + the content of the Na₂O component] is preferably 0% or more, more preferably 0.2% or more, and still more preferably 0.3% or more. Further, the upper limit is preferably 5.0% or less, more preferably 4.0% or less, still more preferably less than 4.0%, yet still more preferably less than 3.0%, and even more preferably less than 2.0%.

When the total content of the MgO component, the CaO component, the SrO component, the BaO component, and the ZnO component [MgO component + CaO component + SrO component + BaO component + ZnO component] is 15.0% or less, chemical strengthening can be made easier to perform. Further, even when the [MgO component + CaO component + SrO component + BaO component + ZnO component] is 0%, it is possible to produce the glass according to the present disclosure. However, if the content exceeds 0%, it is possible to suppress a deterioration in low solubility.

Therefore, the lower limit of the [MgO component + CaO component + SrO component + BaO component + ZnO component] is preferably 0% or more, more preferably more than 0%, still more preferably 0.5% or more, and yet still more preferably 1.0% or more. Further, the upper limit is preferably 15.0% or less, more preferably 10.0% or less, still more preferably 5.0% or less, and yet still more preferably 3.5% or less.

When [the content of the Al₂O₃ component/the content of the K₂O component] is 100.0 or less, it is possible to obtain the desired crystal phase and suppress a deterioration in viscosity. Further, when the value is 0.6 or more, it is possible to suppress a deterioration in resistance to devitrification.

Therefore, the upper limit of [the content of the Al₂O₃ component/the content of the K₂O component] is preferably 100.0 or less, more preferably 80.0 or less, still more preferably 60.0 or less, yet still more preferably 40.0 or less, even more preferably 20.0 or less, and further more preferably 15.0 or less.

Moreover, the lower limit of [the content of the Al₂O₃ component/the content of the K₂O component] is preferably 0.6 or more, more preferably 1.0 or more, still more preferably 2.0 or more, yet still more preferably 3.0 or more, and even more preferably 5.7 or more. Further, the content of the K₂O component can be 0.

When [the content of the Al₂O₃ component/(the content of the K₂O component + the content of the MgO component)] is 20.0 or less, it is possible to obtain the desired crystal phase and suppress a deterioration in viscosity. Further, if the value exceeds 0, it is possible to suppress a deterioration in resistance to devitrification.

Therefore, the upper limit is preferably 20.0 or less, more preferably 18.0 or less, still more preferably 16.0 or less, and yet still more preferably 15.0 or less.

Further, the lower limit of [the content of the Al₂O₃ component/(the content of the K₂O component + the content of the MgO component)] is preferably more than 0, more preferably 1.0 or more, still more preferably 2.0 or more, and yet still more preferably 2.6 or more.

When [the content of the Al₂O₃ component/(the content of the ZnO component + the content of the MgO component)] is 20.0 or less, it is possible to suppress a deterioration in solubility, and when the value is 3.0 or more, it is possible to suppress a deterioration in resistance to devitrification.

Therefore, the upper limit of [the content of the Al₂O₃ component/(the content of the ZnO component + the content of the MgO component)] is preferably 20.0 or less, more preferably 18.0 or less, and still more preferably 16.0 or less. Further, the lower limit is preferably 3.0 or more, more preferably 4.0 or more, and still more preferably more than 5.0.

When [the content of the Li₂O component/the content of the MgO component)] is 150.0 or less, it is possible to suppress a deterioration in resistance to devitrification, and when the value is 8.0 or more, it is possible to obtain the desired crystal phase and chemical strengthening can be made easier to perform.

Therefore, the upper limit of [the content of the Li₂O component/the content of the MgO component] can be preferably 150.0 or less, more preferably 100.0 or less, still more preferably 50.0 or less, yet still more preferably 30.0 or less, even still more preferably 25.0 or less, and further more preferably 23.0 or less. Also, MgO can be 0.

On the other hand, the lower limit of [the content of the Li₂O component/the content of the MgO component] can be preferably 8.0 or more, more preferably 9.0 or more, still more preferably 9.5 or more, yet still more preferably 10.0 or more, and even more preferably 10.6 or more.

When [the content of the Li₂O component/(the content of the MgO component + the content of the CaO component + the content of the SrO component + the content of the BaO component + the content of the Na₂O component + the content of the K₂O component)] is 50.0 or less, it is possible to improve the solubility and suppress a deterioration in resistance to devitrification. Further, when the value is 1.0 or more, it is possible to suppress the difficulty in performing chemical strengthening and obtain the desired crystal phase.

Therefore, the upper limit of [the content of the Li₂O component/(the content of the MgO component + the content of the CaO component + the content of the SrO component + the content of the BaO component + the content of the Na₂O component + the content of the K₂O component)] can be preferably 50.0 or less, more preferably 35.0 or less, still more preferably 30.0 or less, yet still more preferably 20.0 or less, even more preferably 15.0 or less, further more preferably 13.0 or less, and even further more preferably 10.0 or less.

Moreover, [the content of the Li₂O component/(the content of the MgO component + the content of the CaO component + the content of the SrO component + the content of the BaO component + the content of the Na₂O component + the content of the K₂O component)] can be 0.

On the other hand, the lower limit of [the content of the Li₂O component/(the content of the MgO component + the content of the CaO component + the content of the SrO component + the content of the BaO component + the content of the Na₂O component + the content of the K₂O component)] can be preferably 1.0 or more, more preferably 2.0 or more, still more preferably 3.0 or more, and yet still more preferably more than 3.0.

When [the content of the MgO component/(the content of the Li₂O component + the content of the MgO component)] is 0.6 or less, it is possible to suppress the difficulty in performing chemical strengthening and a deterioration in resistance to devitrification, and even when the lower limit is 0, it is possible to produce the glass according to the present disclosure, however, if the value exceeds 0, it is possible to improve the low-temperature solubility while maintaining the resistance to devitrification.

Therefore, the upper limit of [the content of the MgO component/(the content of the Li₂O component + the content of the MgO component)] is preferably 0.6 or less, more preferably 0.3 or less, and still more preferably less than 0.15.

On the other hand, the lower limit of [the content of the MgO component/(the content of the Li₂O component + the content of the MgO component)] can be preferably 0 or more, more preferably 0.01 or more, still more preferably 0.03 or more, and yet still more preferably 0.04 or more.

The total content of the Li₂O component, the Na₂O component, and the K₂O component [the content of the Li₂O component + the content of the Na₂O component + the content of the K₂O component] improves the solubility and is an indicator of the ease of producing the raw glass. That is, when the total content is 17.0% or less, it is possible to suppress the deterioration in resistance to devitrification, and when the total content is 3.0% or more, it is possible to suppress the deterioration in viscosity and an increase in the melting temperature.

Therefore, the upper limit of [the content of the Li₂O component + the content of the Na₂O component + the content of the K₂O component] is preferably 17.0% or less, more preferably 15.0% or less, and still more preferably 14.0% or less.

Moreover, the lower limit of [the content of the Li₂O component + the content of the Na₂O component + the content of the K₂O component] can be preferably 3.0% or more, more preferably 5.0% or more, and still more preferably 8.0% or more.

If the total content of the Li₂O component and the P₂O₅ component [the content of the Li₂O component + the content of the P₂O₅ component] is 18.0% or less, it is possible to suppress a deterioration in resistance to devitrification, and if the total content is 8.0% or more, it is possible to obtain the desired crystal phase.

Therefore, the upper limit of [the content of the Li₂O component + the content of the P₂O₅ component] is preferably 18.0% or less, more preferably 17.0% or less, still more preferably 15.0% or less, and yet still more preferably 13.8% or less.

Moreover, the lower limit of [the content of the Li₂O component + the content of the P₂O₅ component] can be preferably 8.0% or more, more preferably 9.0% or more, still more preferably 10.0% or more, yet still more preferably 11.5% or more, and even more preferably 12.01% or more.

If [the content of the P₂O₅ component/the content of the MgO component] is 50.0 or less, it is possible to suppress a deterioration in low-temperature solubility, and when the value exceeds 0, it is possible to obtain the desired crystal phase.

Therefore, the upper limit of [the content of the P₂O₅ component/the content of the MgO component] is preferably 50.0 or less, more preferably 30.0 or less, still more preferably 10.0 or less, yet still more preferably 5.0 or less, even more preferably 4.1 or less, further more preferably 4.0 or less, and even further more preferably 3.7 or less. Also, the content of the MgO component can be 0.

Further, the lower limit of [the content of the P₂O₅ component/the content of the MgO component] can be preferably more than 0, more preferably 0.02 or more, still more preferably 0.1 or more, yet still more preferably 0.15 or more, and even more preferably 2.4 or more.

When [the content of the SiO₂ component/the content of the ZrO₂ component] is 40.0 or less, it is possible to obtain the desired crystal phase, and when the value is 15.0 or more, it is possible to suppress a deterioration in resistance to devitrification.

Therefore, the upper limit of [the content of the SiO₂ component/the content of the ZrO₂ component] is preferably 40.0 or less, more preferably 37.0 or less, still more preferably 35.4 or less, yet still more preferably 35.0 or less, even more preferably 33.7 or less, and further more preferably 32.7 or less.

Further, the lower limit of [the content of the SiO₂ component/the content of the ZrO₂ component] can be preferably 15.0 or more, more preferably 17.0 or more, still more preferably 18.0 or more, yet still more preferably 19.6 or more, and even more preferably 29.9 or more.

When [the content of the SiO₂ component/the content of the Li₂O component] is 17.0 or less, it is possible to suppress a deterioration in low-temperature solubility, and when the value is 4.0 or more, it is possible to obtain the desired crystal phase.

Therefore, the upper limit of [the content of the SiO₂ component/the content of the Li₂O component] is preferably 17.0 or less, more preferably 15.0 or less, still more preferably 13.0 or less, yet still more preferably 10.0 or less, even more preferably 9.0 or less, and further more preferably 7.6 or less.

Further, the lower limit of [the content of the SiO₂ component/the content of the Li₂O component] can be preferably 4.0 or more, more preferably 4.3 or more, and still more preferably 5.0 or more.

When [the content of the SiO₂ component/the content of the P₂O₅ component] is 100.0 or less, it is possible to obtain the desired crystal phase, and when the value is 13.0 or more, it is possible to suppress a deterioration in resistance to devitrification.

Therefore, the upper limit of [the content of the SiO₂ component/the content of the P₂O₅ component] is preferably 100.0 or less, more preferably 80.0 or less, still more preferably 50.0 or less, yet still more preferably 40.0 or less, and even more preferably 39.0 or less.

Further, the lower limit of [the content of the SiO₂ component/the content of the P₂O₅ component] can be preferably 13.0 or more, more preferably 17.0 or more, still more preferably 20.0 or more, yet still more preferably 30.0 or more, and even more preferably 33.0 or more.

When [the content of the SiO₂ component/(the content of the P₂O₅ component + the content of the ZrO₂ component)] is 100.0 or less, it is possible to obtain the desired crystal phase, and when the value is 4.3 or more, it is possible to suppress a deterioration in resistance to devitrification.

Therefore, the upper limit of [the content of the SiO₂ component/(the content of the P₂O₅ component + the content of the ZrO₂ component)] is preferably 100.0 or less, more preferably 80.0 or less, still more preferably 50.0 or less, yet still more preferably 42.5 or less, even more preferably 35.0 or less, further more preferably 20.0 or less, and even further more preferably 17.99 or less.

Further, the lower limit of [the content of the SiO₂ component/(the content of the P₂O₅ component + the content of the ZrO₂ component)] is preferably 4.3 or more, more preferably 10.0 or more, still more preferably 15.0 or more, and yet still more preferably 16.1 or more.

When [the content of the SiO₂ component/(the content of the Na₂O component + the content of the K₂O component)] is less than 100.0, it is possible to suppress a deterioration in low-temperature solubility, and when the value is 23.0 or more, it is possible to obtain the desired crystal phase.

Therefore, the upper limit of [the content of the SiO₂ component/(the content of the Na₂O component + the content of the K₂O component)] is preferably less than 100.0, more preferably 90.0% or less, and still more preferably 80.0% or less.

Further, the lower limit of [the content of the SiO₂ component/(the content of the Na₂O component + the content of the K₂O component)] can be preferably 23.0 or more, more preferably 25.0 or more, still more preferably 30.0 or more, yet still more preferably 35.0 or more, and even more preferably 54.0 or more.

When [the content of the ZnO component/(the content of the Li₂O component + the content of the P₂O₅ component + the content of the MgO component)] is 1.0 or less, it is possible to obtain the desired crystal phase, and even when the lower limit is 0, it is possible to produce the glass according to the present disclosure, however, if the value exceeds 0, it is possible to improve the low-temperature solubility while maintaining the resistance to devitrification.

Therefore, the upper limit of [the content of the ZnO component/(the content of the Li₂O component + the content of the P₂O₅ component + the content of the MgO component)] is preferably 1.0 or less, more preferably 0.09 or less, still more preferably less than 0.06, and yet still more preferably 0.05 or less.

Further, the lower limit of [the content of the ZnO component/(the content of the Li₂O component + the content of the P₂O₅ component + the content of the MgO component)] can be preferably 0 or more, more preferably more than 0, still more preferably 0.01 or more, yet still more preferably 0.02 or more, and even more preferably 0.03 or more.

When [(the content of the SiO₂ component + the content of the Al₂O₃ component + the content of the P₂O₅ component)/(the content of the Li₂O component + the content of the Na₂O component + the content of the K₂O component + the content of the MgO component)] is 9.0 or less, it is possible to suppress a deterioration in low-temperature solubility, and when the value is 0.7 or more, it is possible to promote crystal precipitation.

Therefore, the upper limit of [(the content of the SiO₂ component + the content of the Al₂O₃ component + the content of the P₂O₅ component)/(the content of the Li₂O component + the content of the Na₂O component + the content of the K₂O component + the content of the MgO component)] is preferably 9.0 or less, more preferably 8.0 or less, and even more preferably less than 7.25.

Moreover, the lower limit of [the content of the SiO₂ component + the content of the Al₂O₃ component + the content of the P₂O₅ component/(the content of the Li₂O component + the content of the Na₂O component + the content of the K₂O component + the content of the MgO component)] can be preferably 0.7 or more, more preferably 4.0 or more, still more preferably 5.0 or more, and yet still more preferably 6.0 or more.

The inorganic composition article (e.g., crystallized glass) according to the present disclosure may or may not contain each of TiO₂, Bi₂O₃, Cr₂O₃, CuO, La₂O₃, MnO, MoO₃, PbO, V₂O₅, WO₃, or Y₂O₃ component, as long as the effects of the present disclosure are not impaired. When the inorganic composition article does not include these components, a deterioration in transmittance is prevented.

Furthermore, the crystallized glass may or may not contain other components not mentioned above, provided that the properties of the crystallized glass according to the present disclosure are not impaired. For example, the crystallized glass may contain metal components such as Yb, Lu, Fe, Co, Ni, and Ag (including oxides of these metals).

Further, as a clarifying agent for glass, in addition to the Sb₂O₃ component, a SnO₂ component, a CeO₂ component, an As₂O₃ component, and one or more types selected from the group consisting of F, NOx, and SOx may or may not be contained. However, the upper limit of the content of the clarifying agent can be preferably 3.0% or less, more preferably 2.0% or less, still more preferably 1.0% or less, and most preferably 0.6% or less.

On the other hand, there is a tendency to avoid the use of components including Pb, Th, Tl, Os, Be, Cl, and Se, which are considered in recent years to be harmful chemical substances, and therefore, it is preferable that such components are substantially not contained.

The crystallized glass can be produced by the following method. That is, the raw materials are uniformly mixed so that the content of each component falls within a prescribed range, and then melt-molded to produce raw glass. Next, the raw glass is crystallized to produce crystallized glass.

The heat treatment for crystal precipitation may be performed at a one-stage temperature or a two-stage temperature.

The two-stage heat treatment includes a nucleation step of firstly treating the raw glass by heat at a first temperature and a crystal growth step of treating, after the nucleation step, the glass by heat at a second temperature higher than that in the nucleation step.

The first temperature of the two-stage heat treatment can be preferably 400°C to 750°C, more preferably 450°C to 720°C, and still more preferably 500°C to 680°C. The retention time at the first temperature is preferably 30 minutes to 2000 minutes, and more preferably 180 minutes to 1440 minutes.

The second temperature of the two-stage heat treatment can be preferably 550°C to 850°C, and more preferably 600°C to 800°C. The retention time at the second temperature is preferably 30 minutes to 600 minutes, and more preferably 60 minutes to 400 minutes.

In the one-stage heat treatment, the nucleation step and the crystal growth step are continuously performed at the one-stage temperature. Typically, the temperature is raised to a predetermined heat treatment temperature, is maintained for a certain period of time after reaching the predetermined heat treatment temperature, and is then lowered.

In the case of one-stage heat treatment, the heat treatment temperature is preferably 600°C to 800°C, and more preferably 630°C to 770°C. Further, the retention time at the heat treatment temperature is preferably 30 minutes to 500 minutes, and more preferably 60 minutes to 400 minutes.

### <Crystallized Inorganic Composition Article>

In one aspect, the inorganic composition article according to the present disclosure includes one or more types of crystal phases selected from lithium disilicate, petalite, vergilite, β-quartz, and lithium monosilicate. When the inorganic composition article includes these crystal phases, it is possible to obtain an inorganic composition article having a high strength and also a higher transmittance even when subjected to thermal processing.

In one aspect, the inorganic composition article according to the present disclosure includes crystal phases of lithium disilicate, petalite, vergilite, and lithium monosilicate.

In one aspect, the inorganic composition article according to the present disclosure includes crystal phases of lithium disilicate, petalite, and vergilite.

In one aspect, the inorganic composition article according to the present disclosure includes crystal phases of lithium disilicate, petalite, and lithium monosilicate.

In one aspect, the inorganic composition article according to the present disclosure includes a crystal phase of petalite.

A method for confirming the crystal phase is as described in the Examples.

The inorganic composition article according to the present disclosure has a transmittance of 50% or more at 550 nm when (after) heated to [At + 50]°C, where At (°C) is a yield point.

The yield point and the transmittance are measured by the method described in the Examples.

The transmittance of the inorganic composition article according to the present disclosure at 550 nm after heated to [At + 50]°C may be 55% or more, 60% or more, 65% or more, or 70% or more.

The transmittance of the inorganic composition article according to the present disclosure at 550 nm after heated to At°C is, for example, 80% or more, 85% or more, or 90% or more.

A difference between the transmittance of the inorganic composition article according to the present disclosure at 550 nm after heated to [At + 50]°C and the transmittance at 550 nm when heated to At°C is, for example, 36% or less, 35% or less, 30% or less, or 25% or less, and the high transmittance can be maintained even when subjected to thermal processing.

Furthermore, the inorganic composition article according to the present disclosure may or may not be subjected to a strengthening treatment such as chemical strengthening. When the strengthening treatment is performed, a compressive stress layer is usually formed on the surface of the crystallized glass. Crystallized glass that has been subjected to a strengthening treatment is also called "strengthened crystallized glass".

An example of a method for forming the compressive stress layer in a strengthened crystallized glass includes a chemical strengthening method in which an alkaline component present in a surface layer of the crystallized glass is subjected to an exchange reaction with an alkaline component with a larger ionic radius to form a compressive stress layer on the surface layer. Other methods include a heat strengthening method in which crystallized glass is heated and then rapidly cooled, and an ion implantation method in which ions are implanted into the surface layer of crystallized glass.

The chemical strengthening method may be implemented according to the following steps, for example. A crystallized glass is contacted to or immersed in a molten salt of a salt containing potassium or sodium, for example, potassium nitrate (KNO₃), sodium nitrate (NaNO₃) or a mixed salt or a complex salt thereof. The treatment of contacting or immersing the crystallized glass to or in the molten salt (chemical strengthening treatment) may be performed in one stage or in two stages.

For example, in the case of the two-stage chemical strengthening treatment, firstly, the crystallized glass is contacted to or immersed in a sodium salt or a mixed salt of potassium and sodium heated at 350°C to 550°C for 1 minute to 1440 minutes, preferably 30 minutes to 500 minutes. Subsequently, secondly, the resultant crystallized glass is contacted to or immersed in a potassium salt or a mixed salt of potassium and sodium heated at 350°C to 550°C for 1 minute to 1440 minutes, preferably 60 minutes to 600 minutes.

In the case of the one-stage chemical strengthening treatment, the glass is contacted to or immersed in a salt containing potassium or sodium heated at 350°C to 550°C or a mixed salt thereof for 1 minute to 1440 minutes.

The heat strengthening method is not particularly limited, but for example, crystallized glass is heated to 300°C to 600°C, and then rapidly cooled by water cooling and/or air cooling, etc., so that a compressive stress layer can be formed due to the temperature difference between the surface and the interior of the glass. Besides, when the heat strengthening method is combined with the chemical treatment method described above, it is possible to more effectively form the compressive stress layer.

The ion implantation method is not particularly limited, but for example, ions are implanted into the surface of the crystallized glass by bombarding the surface with any ions at an acceleration energy and acceleration voltage not enough to destroy the surface. Thereafter, if heat treatment is performed as necessary, it is possible to form the compressive stress layer in the surface in a similar manner to the other methods.

### [EXAMPLES]

### Examples 1 to 4, Comparative Example 1

### 1. Manufacturing of Crystallized Glass

Raw materials of a compound corresponding to a raw material of each component of crystallized glass were selected, and the selected raw materials were weighed and mixed uniformly to have the compositions described in Table 1 in terms of oxide.

Next, the mixed raw materials were fed into a platinum crucible and melted in an electric furnace at a temperature of 1300°C to 1600°C for 2 hours to 24 hours depending on the degree of meltability of the glass composition. Subsequently, the molten glass was stirred and homogenized, cast into a mold after lowering the temperature to 1000°C to 1450°C, and slowly cooled to produce raw glass. The obtained raw glass was heated under the nucleation and crystallization conditions described in Table 2 to prepare crystallized glass. In Table 2, blank cells indicate that the corresponding step was not performed.

### 2. Confirmation of Crystal Phase of Crystallized Glass

The crystal phases contained in the crystallized glass prepared above were determined from the angles of the diffraction peaks and the intensity ratios of multiple diffraction peaks appearing in the X-ray diffraction pattern measured using an X-ray diffraction analyzer (D8Discover, manufactured by Bruker). At this time, from the X-ray diffraction patterns of the crystallized glasses in Examples 1 to 4 and Comparative Example 1, it was confirmed that the crystallized glass contained one or more types of crystal phases selected from lithium disilicate, petalite, vergilite, β-quartz, and lithium monosilicate.

### 3. Measurement of Glass Yield Point (At) of Crystallized Glass

A glass yield point (At) of the crystallized glasses in Examples 1 to 4 and Comparative Example 1 was measured in accordance with the Japan Optical Glass Manufacturers' Association Standard JOGIS08-2019 "Measuring Method for Thermal Expansion of Optical Glass". Table 2 shows the results.

Besides, in the present embodiment, the glass yield point of the crystallized glass is the same as the glass yield point of the inorganic composition article (including chemically strengthened crystallized glass) described later.

### 4. Manufacturing of Inorganic Composition Article

In Examples 1 to 4 and Comparative Example 1, the crystallized glass produced in 1. was cut and ground, and the opposite surfaces were subjected to parallel polishing to result in a thickness of 1.0 mm, and a crystallized glass substrate was obtained. In Examples 1 and 2 and Comparative Example 1, the crystallized glass substrate was used as a base material and chemically strengthened to obtain an inorganic composition article. The manufacturing conditions (reinforcement conditions) of the inorganic composition article are shown in Table 2. The terms "Na single A°C Bhr" in the strengthening conditions means that the crystallized glass substrate is immersed in a molten salt of sodium nitrate (NaNO₃) heated at a temperature of A°C for B hours.

In Examples 3 and 4, the crystallized glass substrate described above was used as the inorganic composition article.

### 5. Measurement of Physical Properties of Inorganic Composition Article

A compressive stress value CS (MPa) of the outermost surface of the inorganic composition articles in Examples 1 and 2 and Comparative Example 1 obtained in 4., a depth DOLzero (µm) obtained when the compressive stress of the compressive stress layer was 0 MPa, and a central tensile stress CT (MPa) were measured using a scattered light photoelastic stress meter (SLP-1000, manufactured by Orihara Industrial Co.,Ltd.). A light source having a wavelength of 405 nm was used as the measurement light source. In Table 2, blank cells indicate that the corresponding measurement was not performed.

The refractive index value at a wavelength of 405 nm was calculated by using a quadratic approximation expression from the measured values of the refractive index at the wavelengths of a C-line, a d-line, an F-line, and a g-line according to the V-block method specified in JIS B 7071-2: 2018.

A photoelastic constant (β) at a wavelength of 405 nm used for the CS, DOLzero, and CT measurements can be calculated from the measured values of the photoelastic constant at a wavelength of 435.8 nm, 546.1 nm, and 643.9 nm by using a quadratic approximation equation. In the examples, 27.3 was used as a representative value.

The photoelastic constant (β) was determined by polishing the sample on the opposite surfaces to form a disk shape with a diameter of 25 mm and a thickness of 8 mm, applying a compressive load in a specified direction, measuring the optical path difference generated at the center of the glass, and calculating the constant using the relational equation δ = β·d·F. In this relational expression, the optical path difference is expressed as δ (nm), the glass thickness as d (cm), and the stress as F (MPa).

### 6. Thin Plate Heat Treatment

Assuming thermal processing, the crystallized glass obtained in 1. was subjected to a thin plate heat treatment.

Firstly, the crystallized glass obtained in 1. was cut and ground, and then the opposite surfaces were subjected to parallel polishing to result in ϕ36 and a thickness of 0.55 mm, and a crystallized glass thin plate was obtained.

Next, Example 2 will be specifically described. The crystallized glass thin plate prepared for Example 2 was retained in a furnace (a SK-3035F furnace manufactured by Motoyama) with the temperature set at 771°C (that is, At in Example 2) for 0.5 hours, then removed from the furnace, and allowed to cool naturally. In addition, the crystallized glass thin plate prepared in Example 2 was retained in the furnace (the SK-3035F furnace manufactured by Motoyama) at 821°C (that is, At + 50°C in Example 2) for 0.5 hours, then removed from the furnace and allowed to cool naturally.

The thin plate heat treatment similar to that of Example 2 was also carried out for Examples 1, 3, and 4 and Comparative Example 1.

The inorganic composition articles in Examples 1 to 4 and Comparative Example 1 were each evaluated as described below. Table 2 shows the results. In Table 2, blank cells indicate that the corresponding measurement was not performed.

### (1) Vickers Hardness (Hv0.2)

The inorganic composition article obtained in 4. above was measured. Specifically, a square pyramid diamond indenter having an angle of 136°C between opposing sides was used to measure the Vickers hardness as a value obtained by dividing the load when the pyramid-shaped depression was formed on the test surface by the surface area (mm²) calculated from the length of the depression. The measurement was performed with a test load of 100 gf and a retention time of 10 seconds using a micro Vickers hardness tester HMV-G21D manufactured by Shimadzu Corporation.

### (2) Young's Modulus (E)

The inorganic composition article obtained in 4. above was measured by an ultrasonic method.

### (3) Transmittance (λ5, λ80)

The inorganic composition article obtained in 4. above was measured. Specifically, the light transmittance including the reflection loss at a thickness of 1 mm was measured using a spectrophotometer (a U-4000 model, manufactured by Hitachi High-Technologies Corporation). The wavelength λ5 (nm) at which the transmittance is 5% and the wavelength λ80 (nm) at which the transmittance is 80% were determined.

### (4) Transmittance

The light transmittance (%) of two crystallized glass thin plates that were subjected to the thin plate heat treatment described above in 6., that is, the one that was heat treated at At (°C) and the one that was heat treated at At + 50 (°C), was measured. Specifically, the light transmittance (%) including the reflection loss at 550 nm was measured at a room temperature using a spectrophotometer (the U-4000 model, manufactured by Hitachi High-Technologies Corporation).

Besides, it is noted that the light transmittance (%) of a crystallized glass thin plate that has been subjected to thin plate heat treatment is the same regardless of whether or not the thin plate heat treatment includes chemical strengthening treatment.

Table 2 shows the above results. From the results in Table 2, it is evident that the inorganic composition article according to the present disclosure is a material having high transmittance even after being subjected to thermal processing.

**[Table 1]**

| Composition (wt%) | Example 1 | Example 2 | Example 3 | Example 4 | Comparative Example 1 |
|---|---|---|---|---|---|
| SiO₂ | 76.07 | 72.34 | 73.34 | 75.14 | 73.59 |
| Al₂O₃ | 7.07 | 10.00 | 9.00 | 9.00 | 7.61 |
| B₂O₃ | | | | | 0.19 |
| P₂O₅ | 2.02 | 2.00 | 2.00 | 2.20 | 2.07 |
| Li₂O | 10.00 | 11.00 | 11.00 | 11.00 | 11.18 |
| Na₂O | 1.01 | | | | |
| K₂O | | 1.00 | 1.00 | 0.30 | 1.60 |
| MgO | 0.81 | 0.80 | 0.80 | 0.30 | |
| CaO | | | | | |
| ZnO | 0.51 | 0.50 | 0.50 | | |
| ZrO₂ | 2.32 | 2.30 | 2.30 | 2.00 | 3.76 |
| Sb₂O₃ | 0.20 | 0.06 | 0.06 | 0.06 | |
| Total | 100.00 | 100.00 | 100.00 | 100.00 | 100.00 |
| Al₂O₃/CK₂O + MgO) | 8.73 | 5.56 | 5.00 | 15.00 | 4.76 |
| Li₂O/MgO | 12.35 | 13.75 | 13.75 | 36.67 | - |
| Li₂O + Na₂O + K₂O | 11.01 | 12.00 | 12.00 | 11.30 | 12.78 |
| Li₂O + P₂O₅ | 12.02 | 13.00 | 13.00 | 13.20 | 13.25 |
| SiO₂/ZrO₂ | 32.80 | 31.45 | 31.89 | 37.57 | 19.58 |
| SiO_{2/}(Na₂O + K₂O) | 75.35 | 72.34 | 73.34 | 250.47 | 46.06 |
| Al₂O₃/(ZnO + MgO) | 5.36 | 7.69 | 6.92 | 30.00 | - |
| CaO + MgO | 0.81 | 0.80 | 0.80 | 0.30 | - |
| MgO/(Li₂O + MgO) | 0.07 | 0.07 | 0.07 | 0.03 | 0.00 |
| Li₂O/(MgO + CaQ + SrO + BaO + Na₂O + K₂O) | 5.49 | 6.11 | 6.11 | 18.33 | 7.00 |
| ZnO/(Li₂O + P₂O₅ + MgO) | 0.04 | 0.04 | 0.04 | 0.00 | 0.00 |
| (SiO₂ + Al₂O₃ + P₂O₅)/ (Li₂O + Na₂O + K₂O + MgO) | 7.21 | 6.59 | 6.59 | 7.44 | 6.51 |
| SiO₂/Li₂O | 7.61 | 6.58 | 6.67 | 6.83 | 6.58 |
| SiO₂/P₂O₅ | 37.67 | 36.17 | 36.67 | 34.15 | 35.59 |
| SiO₂/(P₂O₅+ ZrO₂) | 17.53 | 16.82 | 17.06 | 17.89 | 12.63 |
| Al₂O₃/K₂O | - | 10.00 | 9.00 | 30.00 | 4.76 |
| P₂O₅/MgO | 2.49 | 2.50 | 2.50 | 7.33 | - |
| K₂O + Na₂O | 1.01 | 1.00 | 1.00 | 0.30 | 1.60 |
| MgO + CaO + SrO + BaO + ZnO | 1.32 | 1.30 | 1.30 | 0.30 | 0.00 |

**[Table 2]**

| | | Example 1 | Example 2 | Example 3 | Example 4 | Comparative Example 1 |
|---|---|---|---|---|---|---|
| Nucleation conditions | Temperature [°C] | | | | 620 | |
| | Retention time [h] | | | | 8 | |
| Crystallization conditions | Temperature [°C] | 710 | 730 | 710 | 755 | 710 |
| | Retention time [h] | 4 | 3 | 4 | 3 | 4 |
| Crystallized glass | Crystal phases included | Petalite | Vergilite Petalite | Vergilite Petalite | Vergilite | Petalite |
| | | | Lithium disilicate | Lithium disilicate | Petalite | Lithium disilicate |
| | | | Lithium monosilicate | Lithium monosilicate | Lithium disilicate | Lithium monosilicate |
| | At(°C) | 751 | 771 | 780 | 801 | 811 |
| | Chemical strengthening conditions | Na single 430°C 4 hr | Na single 450°C 4 hr | | | Na single 500°C 4 hr |
| | CS (Mpa) | 168 | 159 | | | 183 |
| | DOLzero (µm) | 122 | 113 | | | 96 |
| | CT (Mpa) | 27 | 76 | | | 60 |
| Inorganic composition article | Hv0.2 | 757 | 730 | | | |
| | E (Gpa) | 104 | | | | |
| | λ5 (nm) | 250 | 244 | 240 | 238 | 227 |
| | A80 (nm) | 377 | 367 | 364 | 356 | 395 |
| | Transmittance (%) at At (°C) | 91.3 | 90.4 | 89.5 | 91.2 | 47.2 |
| | Transmittance (%) at At + 50(°C) | 70 | 52.8 | 54.1 | 68.1 | 10.1 |

Although several embodiments and/or examples according to the present disclosure have been described in detail above, those skilled in the art will readily be able to make numerous modifications to these illustrative embodiments and/or examples without substantially departing from the novel teachings and advantages of the present disclosure. Accordingly, all such variations are intended to be within the scope of the present disclosure.

The contents of all documents cited in the present specification and of the application from which the present application claims priority under the Paris Convention are incorporated by reference in their entirety.

## Claims

1. A crystallized inorganic composition article, comprising: an inorganic composition article having a transmittance of 50% or more at 550 nm when heated to [At + 50]°C, where At (°C) is a yield point, wherein
in a raw glass, by mass% in terms of oxide,
a content of a SiO₂ component is 65.0% to 85.0%,
a content of an Al₂O₃ component is 3.0% to 15.0%,
a content of a P₂O₅ component is more than 0% to 5.0%,
a content of a Li₂O component is more than 5.0% to 15.0%,
a content of a ZrO₂ component is 0% to 10.0%,
a content of a MgO component is 0% to 5.0%,
[the content of the Al₂O₃ component/(a content of a K₂O component + the content of the MgO component)] is more than 0 to 20.0, and
[the content of the Li₂O component/the content of the MgO component] is 8.0 or more.

2. The crystallized inorganic composition article according to claim 1, wherein, in the raw glass, by mass% in terms of oxide,
the content of the K₂O component is 0% to 5.0%,
a content of a ZnO component is 0% to 5.0%, and
a content of a Sb₂O₃ component is 0% to 3.0%.

3. The crystallized inorganic composition article according to claim 1 or 2, comprising: one or more types of crystal phases selected from lithium disilicate, petalite, vergilite, β-quartz, and lithium monosilicate.

4. The crystallized inorganic composition article according to any one of claims 1 to 3, wherein, in the raw glass, by mass% in terms of oxide,
a total content of the Li₂O component, a Na₂O component, and the K₂O component [the content of the Li₂O component + the content of the Na₂O component + the content of the K₂O component] is 3.0% to 17.0%.

5. The crystallized inorganic composition article according to any one of claims 1 to 4, wherein, in the raw glass, by mass% in terms of oxide,
a total content of the Li₂O component and the P₂O₅ component [the content of the Li₂O component + the content of the P₂O₅ component] is 8.0% to 18.0%.

6. The crystallized inorganic composition article according to any one of claims 1 to 5, wherein the raw glass does not contain TiO₂, Bi₂O₃, Cr₂O₃, CuO, La₂O₃, MnO, MoO₃, PbO, V₂O₅, WO₃, or Y₂O₃ component.

7. The crystallized inorganic composition article according to any one of claims 1 to 6, wherein, in the raw glass, by mass% in terms of oxide,
[the content of the SiO₂ component/the content of the ZrO₂ component] is 15.0 to 40.0.

8. The crystallized inorganic composition article according to any one of claims 1 to 7, wherein, in the raw glass, by mass% in terms of oxide,
[the content of the SiO₂ component/(the content of the Na₂O component + the content of the K₂O component)] is 23.0 to less than 100.0.
